Europäisches Patentamt

European Patent Office

Office européen des brevets

(19)

(11) Numéro de publication : **0 044 259**
**B1**

(12)

# FASCICULE DE BREVET EUROPÉEN

(45) Date de publication du fascicule du brevet :
28.11.84

(51) Int. Cl.³ : **B 01 D 53/34**, F 23 G   7/06

(21) Numéro de dépôt : 81401130.0

(22) Date de dépôt : 15.07.81

(54) Procédé d'épuration des gaz et installation pour sa mise en œuvre.

(30) Priorité : 15.07.80 FR 8015593

(43) Date de publication de la demande :
20.01.82 Bulletin 82/03

(45) Mention de la délivrance du brevet :
28.11.84 Bulletin 84/48

(84) Etats contractants désignés :
AT BE CH DE FR GB IT LI LU NL SE

(56) Documents cités :
DE-A- 1 542 358
DE-A- 1 922 949
DE-A- 2 132 797
DE-A- 2 300 687
FR-A- 1 469 109
FR-A- 2 429 046
FR-A- 2 436 954

(73) Titulaire : **TUNZINI-NESSI ENTREPRISES D'EQUIPE-MENTS**
1 place Honoré de Balzac
F-95100 Argenteuil (FR)

(72) Inventeur : **Meunier, Georges**
15 rue Vauthier
F-92100 Boulogne (FR)
Inventeur : **Large, Jean-François**
61 rue Carnot
F-60000 Compiègne (FR)

(74) Mandataire : **Eudes, Marcel et al**
Saint-Gobain Recherche 39 Quai Lucien Lefranc
F-93304 Aubervilliers Cedex (FR)

Jouve, 18, rue St-Denis, 75001 Paris, France

EP 0 044 259 B1

## Description

La présente invention concerne un procédé d'épuration de gaz chargés de matières organiques ou minérales oxydables telles que $H_2S$ ou $NH_3$ et, plus particulièrement, de gaz contenant des matières organiques malodorantes, et/ou toxiques, qui, même à l'état de traces, entraînent des nuisances pour l'environnement.

On connaît déjà de nombreux procédés d'épuration de gaz chargés de matières organiques. De tels procédés sont utilisés notamment pour traiter les effluents gazeux provenant de la fabrication d'aliments pour le bétail, du traitement des tourteaux, et très généralement des industries intéressant les huiles, les savons, les ferments, le sucre, le cuir, les déchets d'origine animale, les engrais organiques, ou encore les élevages intensifs de porcs, de poulets, etc.

Les principaux procédés utilisés dans ces industries font appel à :

a) des traitements physico-chimiques par des solutions acides, alcalines et/ou oxydantes, dans des dispositifs tels que les laveurs de gaz, par exemple, c'est-à-dire selon des techniques dont l'efficacité est souvent médiocre et le coût élevé ;

b) des traitements par adsorption (charbon actif, alumine), de coût élevé et entraînant une forte perte de charge ;

c) une addition de produits masquants, ce qui est généralement d'une faible efficacité ;

d) d'un traitement thermique des effluents gazeux à température suffisamment élevée pour provoquer la destruction par combustion des matières organiques à éliminer.

Cette dernière technique est celle qui présente le plus souvent l'efficacité la meilleure, mais son coût en investissement et en énergie est généralement trop élevé.

Selon cette même technique, c'est d'ailleurs pour réduire la dépense en énergie que le brevet DE-A-2 132 797 propose un procédé permettant de préchauffer le flux des gaz à traiter avant de provoquer la combustion des matières indésirables, puis de récupérer la chaleur sensible des gaz, après ladite combustion, en faisant appel à un échange thermique avec un flux, circulant en sens inverse, et constamment recyclé, d'éléments solides accumulateurs thermiques : ceux-ci sont ainsi utilisés comme agents caloporteurs, qui s'échauffent tout d'abord, puis se refroidissent, à l'occasion de leur mise en contact avec le flux gazeux, respectivement après et avant ladite combustion des matières indésirables.

Des deux dispositifs décrits par ce brevet, celui de la figure 1 comporte une enceinte dans laquelle les éléments solides, tels que des billes, sont déversés en tas et se déplacent en charge par gravité, c'est-à-dire en écoulement compact, ou « lit mobile », depuis un conduit d'admission situé à la partie supérieure de l'enceinte jusqu'à un entonnoir de purge situé à sa partie inférieure, après avoir contourné une chambre de combustion, située à sa partie médiane et délimitée par des parois et un toit en tôle perforée, où sont disposés les brûleurs.

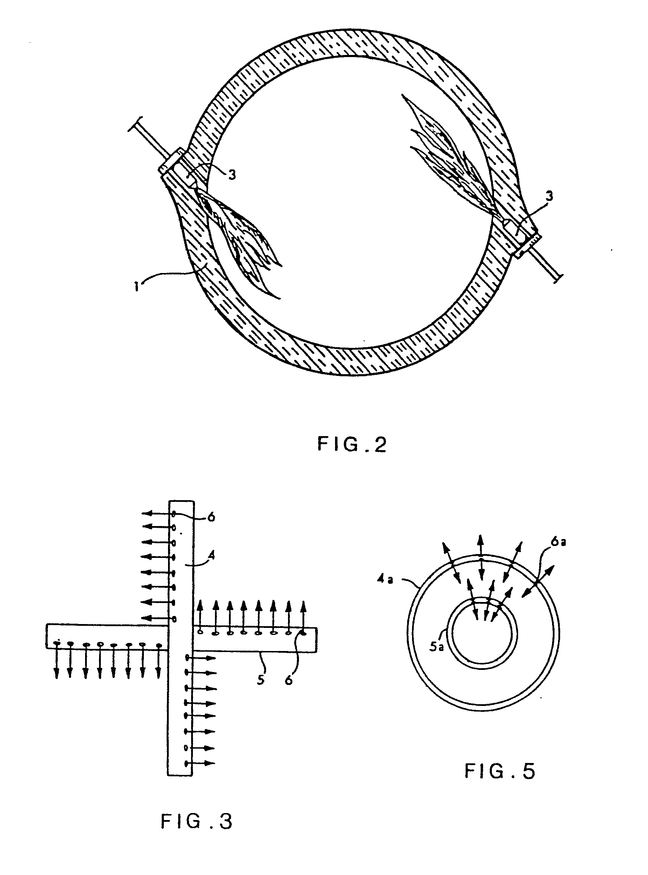

Le dispositif de la figure 2, d'ailleurs à peine évoqué dans la description, prévoit l'immersion des brûleurs au niveau médian de l'enceinte, directement dans le lit mobile des éléments solides en écoulement compact.

Les gaz à traiter qui, selon les deux variantes, parcourent l'enceinte du bas vers le haut, subissent une forte perte de charge à la traversée du lit mobile d'éléments caloporteurs et, par conséquent, la puissance à mettre en œuvre pour obtenir la circulation des gaz est importante.

D'autre part, le rapport pondéral entre gaz et solides contenus dans l'appareil à un instant donné est très faible, ce qui se traduit par une inertie de fonctionnement très importante et par conséquent des réglages très difficiles, conduisant à éviter au maximum les changements de régime pour l'installation dont proviennent les gaz à traiter.

La présente invention, qui a également trait à une technique du dernier type, vise à éviter ces divers inconvénients, et à fournir un procédé et un dispositif qui soient à la fois efficaces et peu coûteux.

A cet effet, la présente invention a pour objet un procédé d'épuration de gaz constituant à mettre en contact, suivant un trajet sensiblement vertical, d'une part les gaz à traiter, se déplaçant sous l'effet d'une différence de pression, de bas en haut, et d'autre part des particules solides réfractaires circulant à contre-courant et en écoulement lâche par gravité, et à soumettre lesdits gaz et particules à un apport thermique localisé, à un niveau sensiblement médian du trajet, les débits de gaz et de particules étant ajustés de manière à sensiblement équilibrer les capacités calorifiques respectives des flux de gaz et de particules, l'apport thermique étant lui-même réglé de manière à élever la température des gaz jusqu'à une valeur permettant la décomposition froides à l'issue dudit trajet, étant alors recyclées, tandis que les gaz, à leur tour ramenés à température voisine de l'ambiance par l'échange thermique avec les particules recyclées, sont évacués vers l'atmosphère, éventuellement après un traitement de dépoussiérage, ledit trajet sensiblement vertical étant chicané à l'aide d'éléments de garnissage de manière à imposer au flux des particules des divisions et des changements de direction, lesdites particules se déplaçant à l'état dispersé au sein dudit flux gazeux, en un écoulement lâche.

Dans un mode préféré de mise en œuvre du procédé, ledit trajet chicané est libre de garnissage au niveau dudit apport thermique localisé, de manière à réaliser un lit fluidisé de type lâche desdites particules au sein dudit flux gazeux.

La présente invention a également pour objet une installation pour la mise en œuvre de ce procédé dans laquelle :

— une colonne comprend de bas en haut :

a) au moins un étage constitué d'un empilement d'éléments de garnissage disposés sur une grille-support occupant la totalité de la section de la colonne ;

b) une chambre de combustion, de préférence munie de brûleurs ;

c) au moins un étage constitué d'un empilement d'éléments de garnissage disposés sur une grille support occupant toute la section de la colonne ;

— des moyens d'introduction des gaz à épurer à la partie inférieure de la colonne et des moyens d'extraction de ces gaz à la partie supérieure ;

— des moyens pour distribuer des particules solides à la partie supérieure de la colonne, et des moyens pour récupérer les particules solides au bas de la colonne et les recycler au haut de la colonne, lesdits moyens de distribution et de récupération de particules assurant l'étanchéité atmosphérique de la colonne.

Ainsi, les particules solides froides distribuées à la partie supérieure de la colonne y sont progressivement réchauffées par échange thermique avec les gaz qui la parcourent à contre-courant en provenance de la chambre de combustion. Dans la partie inférieure de la colonne, ces particules solides réchauffées recèdent leur énergie thermique aux gaz à épurer introduits froids au bas de la colonne. Ainsi, lesdits gaz parviennent dans la chambre de combustion à une température très proche de la température nécessaire à la combustion complète ou du moins à la décomposition des matières organiques ou minérales indésirables.

La présente invention, qui vise principalement le traitement des gaz contenant des matières organiques malodorantes, peut également s'appliquer dans le cas d'effluents gazeux chargés de bactéries. Dans ce cas, il convient d'éviter que les particules solides refroidies arrivant au bas de la colonne, susceptibles de capter alors une partie des bactéries contenues dans les gaz à épurer, puissent les entraîner, lors du recyclage, vers le haut de la colonne où elles pourraient les recéder aux gaz refroidis épurés qui sortent de la colonne. Dans ce but, selon un mode de réalisation avantageux de la présente invention, dans le cas où les gaz à épurer contiennent des bactéries, on effectue un traitement par un gaz antibactérien, tel que le chlore ou l'ozone, des particules solides récupérées au bas de la colonne, avant de les recycler.

Ce traitement peut être effectué dans un bac à lit fluidisé à évacuation par trop plein comportant un tube central plongeant d'amenée des particules et une grille de fluidisation disposée au fond dudit bac et à travers laquelle est envoyé le gaz antibactérien, ainsi qu'un gaz de fluidisation. Les deux gaz peuvent être amenés en mélange sous la grille, ou bien le gaz de fluidisation est amené à la partie périphérique de la grille et le gaz antibactérien dans la zone de la grille située en regard du tube central d'amenée de particules.

Les particules solides peuvent être constituées de différents matériaux résistant à l'attrition, par exemple différents sables ou des matériaux réfractaires résistant à l'attrition tels que des microbilles de vitro-céramique. Ces matériaux sont du type résistant aux agents chimiques. Mais on peut utiliser également des matériaux capables de réagir avec les produits de combustion, notamment l'anhydride sulfureux, et utiliser à cet effet par exemple des particules de calcaire, de chaux ou de dolomie. Ce dernier type de matériau doit être renouvelé après quelques cycles.

Le procédé selon l'invention est peu coûteux grâce à la récupération de chaleur sur les gaz brûlés. Il permet d'obtenir une économie d'énergie qui peut dépasser 80 % par rapport à une combustion sans récupération de chaleur. En outre, il ne nécessite que des installations simples et peu encombrantes.

D'autres éléments, buts et avantages de la présente invention apparaîtront à la lecture de la description qui va suivre, faite en regard des dessins annexés.

Sur ces dessins :

la figure 1    représente une installation destinée à la mise en œuvre du procédé selon l'invention ;

la figure 2    représente des brûleurs utilisés dans l'installation de la figure 1 ;

la figure 3    représente une variante de brûleurs utilisés dans l'installation de la figure 1 ;

la figure 4    représente une variante de bac pour traitement antibactérien ;

la figure 5    représente une autre variante de brûleurs utilisables pour une enceinte de grandes dimensions selon la figure 1.

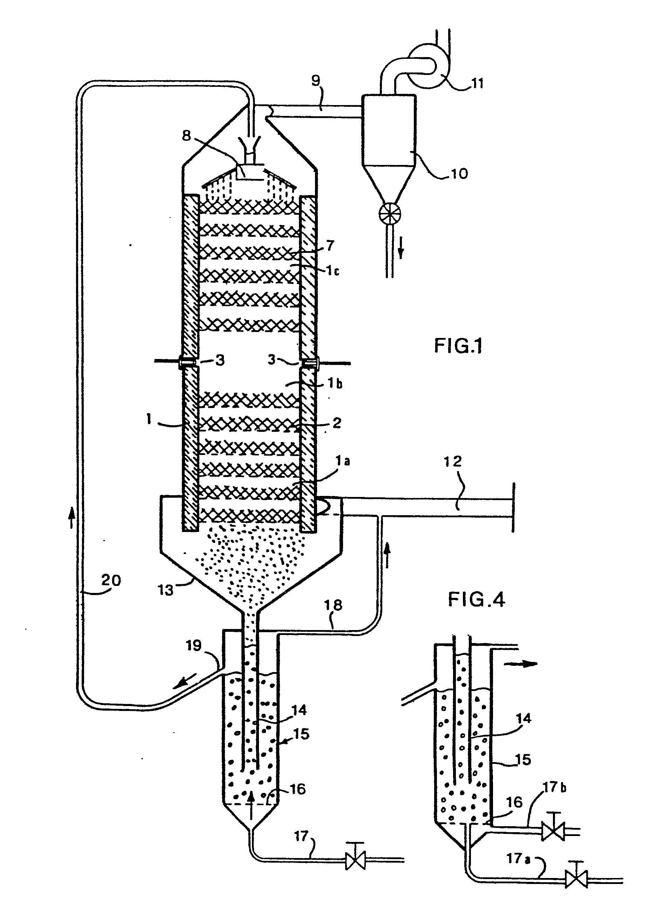

L'installation représentée sur la figure 1 comprend une colonne cylindrique 1, qui comporte dans sa partie inférieure 1a, une succession d'étages tels que 2, chaque étage étant constitué d'un empilement d'éléments de garnissage disposés sur une grille support. Un tel agencement a été décrit dans la publication de brevet FR 2 436 954. Comme indiqué dans ce brevet, le support a un coefficient de vides ou ouverture avantageusement au moins égal à 90 % de la porosité des éléments de garnissage. La colonne 1 comprend dans sa partie médiane 1b une enceinte munie de brûleurs tels que 3. Ces brûleurs peuvent être disposés comme représenté sur la figure 2, c'est-à-dire qu'ils sont diamétralement opposés dans l'enceinte 1b et dirigés obliquement de façon à provoquer un tourbillon et, par suite, un mélange avec les gaz parcourant la colonne 1.

Dans le cas d'installations de grandes dimensions, les brûleurs sont de préférence tels que représentés sur les figures 3 et 5. Dans le cas de la figure 3, ils comportent des injecteurs disposés sur

3

deux tubes 4 et 5 assemblés en croix et percés d'orifices 6 d'axes alignés selon les rayons de chaque tube, et inclinés vers le haut et dans le même sens giratoire, de façon à provoquer également un tourbillon et le mélange avec le gaz ascendants.

Un second brûleur, dont les injecteurs sont de préférence orientés de manière à créer un tourbillon de sens inverse au premier, permet d'optimiser le mélange.

Dans le cas de la figure 5, les brûleurs sont constitués de deux rampes toriques concentriques 4a et 5a munies d'orifices 6a radiaux ou non, mais inclinés vers le haut, par exemple d'environ 45°.

Dans sa partie haute 1c, la colonne 1 comprend une série d'étages tels que 7, du même type que les étages 2 disposés dans la partie 1a de la colonne. Un distributeur 8 de particules solides à étanchéité atmosphérique tel que décrit dans le brevet FR 2 429 046 distribue des particules solides sur toute la surface de l'étage le plus élevé de la partie 1c. La colonne 1 comporte au-dessus du distributeur 8 une cheminée 9 d'évacuation des gaz qui débouche sur un cyclone 10 qui sépare les particules fines résultant de l'éventuelle attrition des particules solides et les évacue. Les gaz sortant du cyclone 10 sont extraits par un ventilateur d'extraction 11 et évacués vers l'extérieur.

Les gaz à épurer sont introduits tangentiellement dans la colonne par un conduit 12 par l'intermédiaire d'un distributeur « cyclonique » 13 dans lequel plonge le bas de la colonne 1 et dont le fond est constitué par une trémie. Ce distributeur permet l'introduction des gaz sans gêner l'écoulement des particules solides qui sont projetées par les gaz tourbillonnants vers les parois de la trémie. Ce dispositif est prolongé à sa partie inférieure par un tube 14 plongeant dans une enceinte 15 qui possède à sa partie inférieure une grille de fluidisation 16. Un conduit 17 permet d'amener des gaz sous cette grille de fluidisation.

En variante, comme représenté sur la figure 4, dans le cas d'un traitement antibactérien, sous la grille de fluidisation 16, sont disposés deux conduits, à savoir un conduit 17a central d'amenée d'un gaz antibactérien et un conduit 17b d'amenée périphérique du gaz de fluidisation proprement dit.

Les gaz sortant de l'enceinte 15 sont évacués vers le conduit 12 par un conduit 18. Les particules sortent de l'enceinte 15 par un trop-plein 19 et sont amenées au distributeur 8 par un dispositif élévateur 20 tel qu'un élévateur à godets ou un transporteur pneumatique.

Le fonctionnement de l'installation est le suivant : les gaz à épurer sont introduits par la canalisation 12. Le ventilateur d'extraction 11 maintient au sein de la colonne une pression inférieure ou égale à la pression atmosphérique de façon à éviter les fuites de gaz vers l'extérieur de l'installation. Le gaz pénètre dans la partie 1a de la colonne où il rencontre à contre-courant des particules solides provenant de l'enceinte 1b dans laquelle une combustion de gaz ou de fuel entretient le niveau de température souhaité, par exemple de l'ordre de 600 à 900 °C pour la combustion des matières organiques malodorantes. Les particules solides qui parcourent la partie 1a cèdent progressivement leur chaleur aux gaz à épurer qui sont donc progressivement réchauffés au cours de leur ascension dans la colonne 1a. La combustion dans la partie 1b de la colonne 1, où les particules solides et les gaz constituent un lit fluidisé lâche, provoque la destruction par oxydation des matières organiques ou minérales qui sont transformées en eau, gaz carbonique, etc.

Les gaz ainsi épurés cèdent leur énergie thermique au cours de leur ascension dans l'enceinte 1c aux particules solides qui s'écoulent à contre-courant à partir du distributeur 8.

Le débit de particules solides est réglé de façon à obtenir un écoulement lâche de ces particules à l'intérieur de la colonne comme cela est décrit dans le brevet FR 2 436 954. De plus, pour obtenir un échange le plus efficace possible, on règle le débit de façon que le produit du débit massique par la chaleur spécifique pour les particules solides soit sensiblement égal au produit du débit massique par la chaleur spécifique pour les gaz à épurer. En pratique, on peut utiliser des débits massiques sensiblement égaux puisque les chaleurs spécifiques, habituellement, sont très voisines.

Les gaz qui sortent de la colonne 1 après passage par le cyclone 10 sont évacués dans l'atmosphère.

Quant aux particules solides qui parcourent à contre-courant la colonne 1, elles sont récupérées dans la trémie 13 d'où elles sont séparées des gaz entrants. Les particules pénètrent ensuite par le conduit 14 dans l'enceinte 15 formant siphon. De l'air est envoyé par le conduit 17 pour fluidiser les particules solides qui sont reprises par l'élévateur 20 et recyclées.

Le débit des particules peut être réglé par la vitesse de recyclage des particules au moyen du dispositif élévateur 20. On utilise alors un récipient de stockage intermédiaire.

La température de combustion peut être réglée par action directe sur l'admission de combustible aux brûleurs, cette régulation se faisant généralement autour d'un point de consigne situé entre 600 et 900 °C.

En outre, si le taux d'oxygène des gaz à traiter est trop faible, on peut assurer une combustion complète du combustible en ajoutant de l'air aux gaz, par exemple au niveau de la chambre de combustion.

Dans le cas où les gaz à épurer contiennent des bactéries, on effectue avantageusement dans l'enceinte 15 un traitement par du chlore ou de l'ozone arrivant sous la grille de fluidisation 16 par le conduit 17a comme représenté sur la figure 4. Ces gaz antibactériens éliminent les bactéries dans cette enceinte 15 de sorte que les particules peuvent être recyclées sans risque d'entraînement de bactéries en haut de la colonne par les gaz froids sortant de cette colonne.

Les exemples suivants illustrent la présente invention.

**0 044 259**

### Exemple 1

Le gaz à épurer est constitué par 400 m³/h, soit environ 520 kg/h, d'« incondensables » provenant de déchets animaux réfrigérés à 40 °C, les condensats étant traités à part ou évacués.

Les « incondensables » saturés de vapeur d'eau à 40 °C sont porteurs d'odeurs organiques extrêmement désagréables qu'il est impossible de libérer à l'atmosphère sans traitement. Ils sont donc captés au fur et à mesure du dégazage des cuiseurs et aspirés vers l'installation de traitement selon l'invention.

Cette installation est constituée, conformément à la figure 1, d'une colonne métallique cylindrique à axe vertical, d'un diamètre extérieur de 700 mm, garnie intérieurement d'un revêtement réfractaire et isolant de 200 mm d'épaisseur. Sa hauteur, hors tout, est de 3 m environ. Les zones 1a et 1c sont constituées de manière identique et comportent chacune six étages de 15 cm de garnissage constitués par des anneaux Pall de 25 × 25 mm, ayant une porosité de 94 % supportés par des caillebotis sans perte de charge notable, comportant des mailles (80 × 20 mm) formées de lames d'acier de 25 × 0,5 mm soudées par points et ayant une ouverture supérieure à 90 %. Dans les zones chaudes, caillebotis et anneaux Pall sont réalisés en acier réfractaire.

Les particules solides recyclables sont constituées de billes de sables de zircon, de granulométrie de l'ordre de 1 à 1,5 mm, présentant une densité vraie de 3,8, apparente de 2,5, une forme approximativement sphérique, une bonne conductibilité, une bonne résistance à l'abrasion, une vitesse limite de chute libre de l'ordre de 10 m/s et une vitesse minimale de fluidisation de 1 m/s.

En régime de fonctionnement, ces billes, après leur écoulement lâche au travers des étages de garnissage, parviennent au bas de la colonne à une température de l'ordre de 100 °C.

Les gaz à traiter sont admis dans la partie basse de la colonne à une température d'environ 40 °C et à une vitesse d'environ 1,6 m/s.

Le débit de billes est réglé de manière à être sensiblement égal à celui des gaz, soit environ 500 à 550 kg/h. Aucune condensation n'est à craindre dans la zone basse de la colonne, la température des billes étant naturellement toujours plus élevée que celle des gaz à traiter. Les gaz s'élèvent tout d'abord au travers de la zone 1a et s'y échauffent peu à peu au contact du ruissellement de billes, pour atteindre environ 700 °C en parvenant dans la zone 1b, où ils sont portés à environ 800 °C par l'effet des brûleurs 3 à gaz, pour une consommation de gaz naturel de l'ordre de 2 m³/h. La vitesse des gaz est alors d'environ 6 m/s.

Dans cette zone, par l'action de l'oxygène de l'air et de la température, les vapeurs, particules ou vésicules organiques sont détruites et transformées essentiellement en $CO_2$, $H_2O$, et $SO_2$ si les produits sont soufrés (mercaptans, etc.).

Quant aux cendres minérales éventuellement formées, elles sont entraînées par le flux gazeux.

Les gaz ainsi traités poursuivent ensuite leur ascension, à la rencontre des villes plus froides qui s'écoulent à travers l'échangeur supérieur 1c. Le transfert thermique s'effectue d'étage en étage d'une façon analogue à la zone 1a et les gaz cèdent leur énergie aux particules en écoulement lâche.

Les gaz sont évacués sur le cyclone 10, puis le ventilateur extracteur 11 les rejette épurés dans l'atmosphère à environ 120 à 140 °C.

Les particules solides séparées au bas de la colonne passent dans l'enceinte 15, formant siphon alimenté en air par la grille 16, puis sont recyclées vers le haut de la colonne par un élévateur à godets.

### Exemple 2

Les gaz à traiter sont issus de cuves de fermentation et pollués de bactéries qu'il convient de détruire avant rejet dans l'atmosphère (30 000 m³/h).

On utilise une colonne du type représenté à la figure 1 ayant un diamètre intérieur de 1,50 m et une hauteur de 7 m au total.

Les parties 1a et 1c sont constituées chacune de huit étages, quatre de 20 cm en haut et en bas, quatre de 15 cm au milieu, le garnissage étant formé d'anneaux Pall de 25 × 25 mm, supportés par un caillebotis tel que défini dans l'exemple 1.

La zone de combustion à une hauteur de 2 m.

On utilise deux étages de brûleurs, du type représenté sur la figure 3.

On effectue un recyclage de 39 t/h de billes de zircon ayant un diamètre de 1,2 à 1,6 mm.

Pour une consommation de gaz naturel d'environ 100 m³/h, les températures sont les suivantes :

| | |
|---|---|
| entrée des gaz : | 30 °C |
| traitement dans 1b : | 320 °C |
| sortie des solides : | 70 °C |
| alimentation des solides : | 60 °C |
| sortie des gaz : | 100 °C |

Dans l'enceinte 15, on utilise une grille à double alimentation comme représenté sur la figure 4 : ozone au centre, air en périphérie.

**0 044 259**

Le tube central, d'un diamètre de 150 mm, est alimenté avec un débit d'air ozonisé de 40 m³/h (1 m/s) et le tube extérieur, d un diamètre de 400 mm, avec un débit d'air de 400 m³/h.

## Revendications

1. Procédé d'épuration de gaz comportant la mise en contact, suivant un trajet sensiblement vertical, d'une part, des gaz à traiter, se déplaçant de bas en haut sous l'effet d'une différence de pression, et d'autre part, de particules solides réfractaires circulant à contre-courant, du haut vers le bas, sous l'effet de la pesanteur, selon lequel lesdits gaz sont soumis, dans une région sensiblement médiane dudit trajet, à un apport thermique localisé réglé de manière à élever la température des gaz jusqu'à une valeur permettant la décomposition des matières à éliminer, et les débits de gaz et de particules sont ajustés de manière à sensiblement équilibrer les capacités calorifiques respectives des flux de gaz et de particules, et ainsi à permettre de ramener à une température voisine de l'ambiante, à la fin de leurs parcours dudit trajet, d'une part les gaz traités, avant de les évacuer vers l'extérieur, d'autre part, les particules réfractaires, avant de les recycler pour un nouveau parcours dudit trajet, ledit trajet sensiblement vertical étant chicané à l'aide d'éléments de garnissage de manière à imposer au flux des particules des divisions et des changements de direction, caractérisé en ce que lesdites particules se déplacent à l'état dispersé au sein dudit flux gazeux, en un écoulement lâche.

2. Procédé selon la revendication 1, caractérisé en ce que, dans ladite région médiane, ledit trajet est libre de garnissage de manière à réaliser un lit fluidisé de type lâche desdites particules au sein dudit flux gazeux.

3. Procédé selon les revendications 1 ou 2, caractérisé en ce que ledit apport thermique est effectué à l'aide de flammes par injection d'un combustible et éventuellement d'un comburant au sein dudit lit lâche.

4. Procédé selon l'une des revendications 1 à 3, caractérisé en ce qu'on effectue un traitement par un gaz antibactérien des particules solides à l'issue du trajet avant de les recycler.

5. Procédé selon la revendication 4, caractérisé en ce qu'on effectue ledit traitement par fluidisation dense desdites particules à l'aide d'un gaz contenant le gaz antibactérien.

6. Procédé selon l'une quelconque des revendications 1 à 5, caractérisé en ce qu'on maintient le gaz circulant à contre-courant des particules sous une pression inférieure ou égale à la pression atmosphérique.

7. Installation pour la mise en œuvre d'un procédé selon la revendication 1 dans laquelle :
— une colonne comprend de base en haut :
a) au moins un étage (2) constitué d'un empilement d'éléments de garnissage disposés sur une grille-support occupant la totalité de la section de la colonne ;
b) une chambre de combustion (1b) ;
c) au moins un étage (7) constitué d'un empilement d'éléments de garnissage disposés sur une grille support occupant toute la section de la colonne ;
— des moyens (12) d'introduction des gaz à épurer à la partie inférieure de la colonne et des moyens (9 à 11) d'extraction de ces gaz à la partie supérieure de la colonne ;
— des moyens (8) pour distribuer des particules solides à la partie supérieure de la colonne, et des moyens (14 à 20) pour récupérer les particules solides au bas de la colonne et les recycler au haut de la colonne, lesdits moyens de distribution et de récupération de particules assurant l'étanchéité atmosphérique de la colonne.

8. Installation selon la revendication 7, caractérisée en ce qu'elle comprend pour le recyclage des particules solides au bas de la colonne une enceinte (15) comportant une grille de fluidisation (16) disposée au fond de cette enceinte, ainsi que des conduits (17a, 17b) d'amenée du gaz de fluidisation et, le cas échéant, d'un gaz de traitement, débouchant sous cette grille de fluidisation, un tube (14) d'amenée des particules au-dessus de ladite grille, formant siphon d'étanchéité lorsque les particules y sont mises à l'état de fluidisation dense et un élévateur (20).

9. Installation selon la revendication 8, caractérisée en ce que le gaz de traitement est amené par un conduit (17a) dans la zone de la grille de fluidisation située en regard du tube (14) d'amenée des particules, et le gaz de fluidisation par un conduit (17b) dans la partie de la grille extérieure à cette zone.

10. Installation selon l'une des revendications 7 à 9, caractérisée en ce qu'elle comprend un distributeur cyclonique (13) pour l'introduction tangentielle des gaz dans la colonne.

11. Installation selon l'une quelconque des revendications 7 à 10, caractérisée en ce que la chambre de combustion (1b) comprend deux brûleurs (3) diamétralement opposés et dirigés obliquement.

12. Installation selon l'une quelconque des revendications 7 à 10, caractérisée en ce que la chambre de combustion (1b) comprend des brûleurs comportant des injecteurs sur deux tubes (4 et 5) assemblés en croix et percés d'orifices (6) inclinés vers le haut et dans le même sens giratoire.

13. Installation selon l'une quelconque des revendications 7 à 10, caractérisé en ce que la chambre de combustion (1b) comprend des brûleurs (4a, 5a), constitués de deux rampes toriques munies d'orifices (6a) inclinés vers le haut.

6

## 0 044 259

### Claims

1. A method of purifying gases comprising putting in contact, according to a path which is substantially vertical, on the one hand the gas to be treated displaced upwardly under the effect of a pressure difference, and on the other hand solid refractory particles moving counter-current downwardly under the effect of their weight, in which the gas is subjected in a substantially middle region of said path, to a localised heating adjusted in such a manner as to raise the temperature of the gas to a value allowing decomposition of matter to be eliminated, and the rates of feed of gas and particles are adjusted in such a manner as to substantially equilibrate the respective heat capacities of the flows of gas and the particles, and thus to allow return to a temperature close to ambient temperature at the end of their passage in said path, on the one hand of the gas treated before evacuation to the exterior and on the other hand the refractory particles before they are recycled to pass again through said path, said substantially vertical path being baffled by means of filling elements to impose on the flow of particles divisions and changes in direction characterised in that said particles move in free flow in the dispersed state within said gaseous flow.

2. Method according to Claim 1, characterised in that in said middle region, said path is free of filling elements to form a fluidised bed of the free flow type of said particles within said gaseous flow.

3. Method according to Claim 1 or 2, characterised in that said heating is carried out by a means of flames by injection of fuel and optionally a supporter of combustion within said free bed.

4. Method according to one of Claims 1 to 3, characterised in that there is carried out a treatment of the solid particles by an antibacterial gas at the end of the path before they are recycled.

5. Method according to Claim 4, characterised in that said treatment is carried out by dense fluidisation of said particles by means of a gas containing the antibacterial gas.

6. Method according to any one of Claims 1 to 5, characterised in that the gas circulating counter-current to the particles is maintained at a pressure less than or equal to atmospheric pressure.

7. Apparatus for carrying out a method according to Claim 1 in which :
— a column comprises from bottom to top :
a) at least one stage (2) formed of a stack of filling elements arranged on a support grid occupying the whole of the cross-section of the column ;
b) a combustion chamber (1b) ;
c) at least one stage (7) formed of a stack of packing elements arranged on a support grid occupying the whole cross-section of the column ;
— means (12) for introducing the gas to be purified at the lower part of the column and means (9 to 11) for extracting the gas at the upper part of the column ;
— means (8) for distributing the solid particles at the upper part of the column, and means (14 to 20) for recovering the solid particles at the bottom of the column and recycling them to the top of the column, said means for distribution and recovery of the particles ensuring airtightness to the atmosphere of the column.

8. Apparatus according to Claim 7, characterised in that it comprises for recycling the solid particles at the bottom of the column an enclosure (15) comprising a fluidisation grid (16) arranged at the bottom of said enclosure and also ducts (17a, 17b) for feeding gas for fluidisation and, if required, gas for treatment opening below this fluidisation grid, a tube (14) for feeding the particles above said grid, forming and airtight syphon when the particles therein are put in the state of dense fluidisation, and an elevator (20).

9. Apparatus according to Claim 8, characterised in that the gas for treatment is brought by a duct (17a) into the zone of the fluidisation grid situated facing the tube (14) for feeding the particles, and the fluidisation gas by a duct (17b) in the part of the grid outside this zone.

10. Apparatus according to one Claims 7 to 9, characterised in that it comprises a cyclonic distributor (13) for tangential introduction of gas into the column.

11. Apparatus according to any one of Claims 7 to 10, characterised in that the combustion chamber (1b) comprises two burners (3) diametrically opposed and obliquely directed.

12. Apparatus according to any one of Claims 7 to 10, characterised in that the combustion chamber (1b) comprises burners comprising injectors on two tubes (4 and 5) assembled as a cross and pierced with orifices (6) inclined upwardly and in the same gyratory direction.

13. Apparatus according to any one of Claims 7 to 10, characterised in that the combustion chamber (1b) comprises burners (4a, 5a), formed of two toroidal rows provided with orifices (6a) inclined upwardly.

### Ansprüche

1. Verfahren zum Reinigen von Gasen, bei dem längs einer im wesentlichen vertikalen Bahn die zu behandelnden Gase, welche unter Wirkung eines Differenzdrucks von unten nach oben strömen, und feuerbeständige Festkörperteilchen in Kontakt gebracht werden, welche sich im Gegenstrom aufgrund Schwerkraft von oben nach unten bewegen, bei welchem die Gase in einem im wesentlichen mittleren Abschnitt der Bahn einer lokalisierten und geregelten Wärmezufuhr unterzogen werden, derart, daß die Temperatur der Gase bis auf einen Wert erhöht wird, der die Zersetzung von zu eliminierenden

7

Materialien erlaubt, und bei dem die Mengen an Gas und Teilchen derart eingestellt werden, daß die Wärmekapazitäten der Gasströme und Teilchen im wesentlichen ausgeglichen sind, und somit am Ende ihres Bahndurchlaufs die behandelten Gase vor Abführung in die Umgebung und die feuerbeständigen Teilchen vor erneuter Umwälzung längs der Bahn auf Umgebungstemperatur gebracht werden, wobei die im wesentlichen vertikale Bahn durch Füllkörperelemente abgelenkt wird, um den Teilchenstrom aufzuteilen und diesem Richtungsänderungen aufzuzwingen, dadurch gekennzeichnet, daß die Teilchen sich im dispergierten Zustand innerhalb des Gasstroms in einer leichten Strömung bewegen.

2. Verfahren nach Anspruch 1, dadurch gekennzeichnet, daß der mittlere Abschnitt der Bahn frei von Füllkörpern ist, so daß sich ein lockeres Schwebebett der Teilchen im Inneren des Gasstroms einstellt.

3. Verfahren nach Anspruch 1 oder 2, dadurch gekennzeichnet, daß die Wärmezufuhr mit Hilfe von Flammen durch Injektion eines Brennstoffs und evtl. eines Sauerstoffträgers in das Innere des Schwebebetts erfolgt.

4. Verfahren nach einem der Ansprüche 1 bis 3, dadurch gekennzeichnet, daß die Festkörperteilchen nach Durchlaufen der Bahn vor ihrer Rückführung durch ein antibakterielles Gas behandelt werden.

5. Verfahren nach Anspruch 4, dadurch gekennzeichnet, daß die Behandlung durch eine dichte Fluidisierung der Teilchen mit Hilfe eines das antibakterielle Gas enthaltenden Gases erfolgt.

6. Verfahren nach einem der Ansprüche 1 bis 5, dadurch gekennzeichnet, daß man das im Gegenstrom zu den Teilchen zirkulierende Gas auf einem Druck kleiner oder gleich dem atmosphärischen Druck hält.

7. Anlage zur Durchführung des Verfahrens gemäß Anspruch 1, dadurch gekennzeichnet,
— daß eine Kolonne von unten nach oben enthält :
    a) mindestens eine stufe (2) mit einem Stapel von Füllkörperelementen, die auf einem Stützgitter angeordnet sind, welches den gesamten Querschnitt der Kolonne durchsetzt ;
    b) eine Verbrennungskammer (1b) ;
    c) mindestens Stufe (7) mit einem Stapel von Füllkörperelementen, welche auf einem Stützgitter angeordnet sind, welches den gesamten Querschnitt der Kolonne durchsetzt ;
— daß Mittel (12) zur Einführung der zu reinigenden Gase im unteren Teil der Kolonne und Mittel (9-11) zum Abführen dieser Gase am oberen Abschnitt der Kolonne sowie
— Mittel (8) zur Verteilung der Festkörperteilchen im oberen Abschnitt der Kolonne und Mittel (14-20) zur Wiedergewinnung der Festkörperteilchen am Boden der Kolonne und zur Rückführung der Teilchen zum oberen Abschnitt der Kolonne vorgesehen sind, wobei die Mittel zur Verteilung und zur Wiedergewinnung der Teilchen einen atmosphärisch dichten Abschluß der Kolonne sicherstellen.

8. Anlage nach Anspruch 7, dadurch gekennzeichnet, daß die Anlage zur Rückführung der Festkörperteilchen am Boden der Kolonne einen Behälter (15) umfaßt, an dessen Boden ein Gitterrost zur Fluidisierung angeordnet ist, sowie Zufuhrleitungen (17a, 17b) für das Fluidisiergas und gegebenenfalls ein Behandlungsgas aufweist, welche unter dem Gitterrost für die Fluidisierung münden, und daß ein Rohr (14) für die Zufuhr der Teilchen oberhalb des Gitterrosts vorgesehen ist, welches einen Dichtsyphon für die in ein dichtes Schwebebett überführten Teilchen bilden, und daß die Anlage einen Elevator (20) besitzt.

9. Anlage nach Anspruch 8, dadurch gekennzeichnet, daß das Behandlungsgas durch eine Leitung (17a) in die Zone des Gitterrostes für die Fluidisierung geführt wird, welche dem Zuführrohr (14) für die Teilchen gegenüberliegt, und daß das Fluidisiergas durch eine Leitung (17b) in den Teil des Gitterrostes außerhalb dieser Zone geführt wird.

10. Anlage nach einem der Ansprüche 7-9, dadurch gekennzeichnet, daß die Anlage einen Zyklonverteiler (13) zur tangentialen Einführung des Gases in die Kolonne aufweist.

11. Anlage nach einem der Ansprüche 7-10, dadurch gekennzeichnet, daß die Verbrennungskammer (1b) zwei diametral gegenüber angeordnete und schräggerichtete Brenner (3) aufweist.

12. Anlage nach einem der Ansprüche 7-10, dadurch gekennzeichnet, daß die Verbrennungskammer (1b) Brenner aufweist, welche Injektoren auf zwei Rohren (4 und 5) besitzen, die über Kreuz angeordnet und mit schräg nach oben verlaufenden und im selben Drehsinn angeordneten Öffnungen (6) versehen sind.

13. Anlage nach einem der Ansprüche 7 bis 10, dadurch gekennzeichnet, daß die Verbrennungskammer (1b) Brenner (4a, 5a) aufweist, die von zwei torischen Rampen gebildet sind, die mit schräg nach oben geneigten Öffnungen (6a) versehen sind.

FIG.1

FIG.4

FIG.2

FIG.3

FIG.5